# EUROPEAN PATENT APPLICATION

(11) **EP 3 720 134 A1**
(43) Date of publication of application: **07.10.2020**
(21) Application number: 19220290.1
(22) Date of filing: 31.12.2019
(51) Int. Cl.: H04N 21/2343, H04N 21/438, H04N 21/63, H04N 21/6405, H04N 19/177, H04N 19/30

(54) **SYSTEMS AND METHODS FOR FAST CHANNEL CHANGING USING DIFFERENT GOP LENGTHS**

(30) Priority: 02.04.2019 US 201962828191 P; 23.09.2019 US 201916579433
(71) Applicant: NBCUniversal Media, LLC, New York, NY 10112 (US)
(72) Inventor: REITMEIER, Glenn Arthur, New York, NY 10112 (US)
(74) Representative: Richardson, Mark Jonathan

(57) **Abstract**

The present disclosure is generally directed to mitigating decoding and rendering delay experienced during channel change operations. In particular, the techniques provided herein use a first stream (118) of content with a relatively low group of pictures (GOP) length as a temporary content to decode and render while a second version (116) with a relatively larger GOP length is decoded. By rendering the first stream during decoding of a second stream, the digital channel changing operation may be enhanced by rendering a version of the digital content (106) with less delay.

## Description

### TECHNICAL FIELD

The present disclosure relates to systems and methods for fast channel changing. Aspects of the invention relate to fast channel changing circuitry, a fast channel changing adapted content encoding system and a circuitry-implemented method.

### BACKGROUND

The present disclosure relates generally to the field of digital content for the delivery of video, audio and multi-media content, and more particularly to techniques for the rapid channel changing of channels of digital content delivery.

Over the past decades, delivery of content to audiences (e.g., for entertainment, educational, and similar purposes) has evolved significantly. Historically, films, books, and print matter were delivered by conventional cinemas, the mail, and retail establishments. Conventional television transmissions evolved from broadcast technologies to cable, satellite and digital delivery. Digital content has become a primary mechanism for content delivery with ever increasing resolution and feature enhancements, such as enhanced audio tracks, transmission of supplemental data, etc. With enhanced content comes increased bandwidth requirements, as more data is distributed over, oftentimes, intricate communications networks. As bandwidth demands increase, sophisticated compression and/or encoding schemes have been introduced to reduce an amount of transmission data, helping to meet bandwidth constraints. In the era of analog signals, very fast channel change operations (e.g., <30 milliseconds) could be implemented, resulting in rapid rendering of the analog content. Unfortunately, however, the compression and/or encoding schemes used in transmitting digital content over broadcast channels has negatively impacted rapid rendering of digital content (e.g., upon a digital channel change operation), as the content typically requires decoding and/or decompression prior to rendering. In fact, changing digital content channels oftentimes requires, synchronization of the digital signal, demodulation of the signal into bits, deinterleaving and error correcting the bits, performing packet synchronization, filling video and audio buffers, achieving a video bit stream variable length coding synchronization and beginning a decoding of a compressed video syntax all prior to rendering the digital content. To exacerbate the issue, the encoded content typically includes a relatively long group of pictures (GOP) that include relatively large spans between frames, such as intra-coded frames (I-frames) that can be decoded independent of data from other video frames. Thus, upon a digital channel change operation, an undesirable lag in rendering the digital content may be observed because the rendering may not be possible until the next I-frame is available. Accordingly, there is a particular need for systems and methods that provide a faster rendering of digital content upon a digital channel change operation, mitigating the undesirable rendering lag of traditional digital content rendering systems.

### SUMMARY

According to a first aspect of the present invention, there is provided a fast channel changing circuitry configured to: receive a request to perform a digital channel change operation to a particular channel; receive a fast channel changing adapted content for content of the particular channel, the fast channel changing adapted content comprising: a first stream; and a second stream; wherein a group of pictures (GOP) length of the first stream is smaller than a GOP length of the second stream; decode and render the first stream while the second stream is decoded; and after decoding the second stream, render the second stream.

Preferably, the first and second streams display different versions of the same audio and video content.

The fast channel changing adapted content may comprise a scalable high efficiency video coding (SHVC) bit stream.

The first stream may comprise a base layer (BL) and the second stream may comprise an enhancement layer (EL), wherein the BL, when added to the EL, may be used to generate the content.

Rendering the second stream may comprise rendering a combination of the BL and the EL such that the EL supplements the BL to render the content.

Preferably, the SHVC bit stream provides spatial scalability.

Preferably, the SHVC bit stream provides quality scalability.

Preferably, the SHVC bit stream provides temporal scalability.

The fast channel changing adapted content may comprise simulcast streams.

The first stream may comprise a low quality (LQ) version of the content and the second stream may comprise a high quality (HQ) version of the content.

Rendering the second stream may comprise rendering the HQ version of the content in lieu of the LQ version via a switchover.

According to a second aspect of the present invention, there is provided a fast channel changing adapted content encoding system configured to: receive digital content; down-sample the digital content to generate a down-sampled version of the digital content; generate fast channel changing adapted content by: encoding the down-sampled version of the digital content to generate a first stream for subsequent decoding and rendering while a second stream is being decoded; and encoding the digital content to generate the second stream; and provide the fast channel changing adapted content to tuning circuitry configured to decode and render the first stream in an interim, while decoding the second stream.

Preferably, the fast channel changing adapted content encoding system is configured to generate the fast channel changing adapted content, by generating the first stream with a relatively short group of picture (GOP) length, enabling faster decoding and rendering of the first stream sufficient to mitigate at least a portion of a content rendering delay during a digital channel change operation.

Preferably, the relatively short GOP length is 15 frames or less.

The fast channel changing adapted content encoding system may be configured to generate the fast channel changing adapted content by: generating the second stream with a relatively high GOP length, enabling more efficient compression of the second stream; and wherein a decode and rendering delay caused by the more efficient compression is at least partially counteracted by the faster decoding and rendering of the first stream.

Preferably, the relatively high GOP length is greater than 15 frames.

The fast channel changing adapted content may comprise a scalable high efficiency video coding (SHVC) bit stream.

The first stream may comprise a base layer (BL) and the second stream may comprise an enhancement layer (EL) that when combined with the BL may be used to produce the digital content.

The fast channel changing adapted content may comprise simulcast streams of the first stream and the second stream, wherein each of the first stream and the second stream can be independently decoded to render a version of the digital content.

Preferably, the first stream comprises a low resolution stream of the digital content and the second stream comprises a relatively higher quality version of the digital content.

According to a third aspect of the present invention, there is provided a circuitry implemented method, comprising: determining, via the circuitry, that a digital channel change operation is to be performed; upon determining that the digital channel change operation is to be performed, decoding and rendering a first stream of digital content associated with a particular digital channel to be tuned to in the digital channel change operation; while rendering the first stream of the digital content, decoding a second stream of the digital content; and rendering the second stream of the digital content in lieu of or supplemental to the first stream upon decoding of the second stream of the digital content.

The first stream may comprise a base layer (BL) of a scalable high efficiency video coding (SHVC) bit stream; and the second stream may comprise an enhancement layer (EL) of the SHVC bit stream; and the circuitry implemented method may comprise rendering the second stream by supplementing the BL with the EL.

The first stream may comprise a relatively lower quality (LQ) version of the digital content; the second stream may comprise a relatively higher quality (HQ) version of the digital content; and the circuitry implemented method may comprise rendering the second stream by rendering the HQ version in lieu of the LQ version via a simulcast stream switchover.

The first stream of digital content may comprise a relatively shorter group of pictures (GOP) length in comparison to a GOP length of the second stream, enabling faster decoding of the first stream of the digital content for fast rendering during the digital channel change operation.

According to a fourth aspect of the present invention, there is provided a fast channel changing circuitry comprising means for carrying out the circuitry implemented method according to the third aspect of the present invention as described above.

According to a fifth aspect of the present invention, there is provided a fast channel changing adapted content encoding system implemented-method, the method comprising: receiving digital content; down-sampling the digital content to generate a down-sampled version of the digital content; generating fast channel changing adapted content, by: encoding the down-sampled version of the digital content to generate a first stream for subsequent decoding and rendering while a second stream is being decoded; and encoding the digital content to generate the second stream; wherein a group of pictures (GOP) length of the first stream is smaller than a GOP length of the second stream; and providing the fast channel changing adapted content to tuning circuitry comprising fast channel changing circuitry configured to decode and render the first stream in an interim, while decoding the second stream.

According to a sixth aspect of the present invention, there is provided a fast channel changing adapted content encoding system comprising means for carrying out the fast channel changing adapted content encoding system-implemented method according to the fifth aspect of the present invention as described above.

### DRAWINGS

These and other features, aspects, and advantages of the present disclosure will become better understood when the following detailed description is read with reference to the accompanying drawings in which like characters represent like parts throughout the drawings, wherein:
FIG. 1 is a diagrammatical overview of an exemplary digital content delivery and rendering system where fast channel changing techniques have been implemented, in accordance with aspects of the present embodiments;
FIG. 2 is a schematic diagram illustrating compressed digital content that, when unmitigated, may cause undesirable channel changing lag, in accordance with aspects of the present embodiments;
FIG. 3 is a diagrammatical representation of an example system where traditional channel changing operations result in an undesirable channel changing lag, in accordance with aspects of the present embodiments;
FIG. 4 is a diagrammatical representation of an example system where the fast channel changing circuitry of FIG. 1 is used to mitigate undesirable channel changing lag, in accordance with aspects of the present embodiments;
FIG. 5 is a flow chart illustrating a process for generating fast channel changing content for use by the fast channel changing circuitry of FIG. 1, in accordance with aspects of the present embodiments;
FIG. 6 is a schematic diagram of fast channel changing adapted content generated in the form of a base layer and an enhancement layer, in accordance with aspects of the present embodiments;
FIG. 7 is a schematic diagram of scalable high efficiency video coding (SHVC) circuitry that may be used to generate the fast channel changing adapted content of FIG. 6, in accordance with aspects of the present embodiments;
FIG. 8 is a schematic diagram of fast channel changing adapted content generated in the form of independent high quality (HQ) / full content stream and a relatively lower quality (LQ) / Rapid Tuning Stream, in accordance with aspects of the present embodiments; and
FIG. 9 is flowchart, illustrating a process for using fast channel changing adapted content to provide fast channel changing that mitigates traditional digital content rendering lag, in accordance with aspects of the present embodiments.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. It should be noted that the term "multimedia" and "media" may be used interchangeably herein.

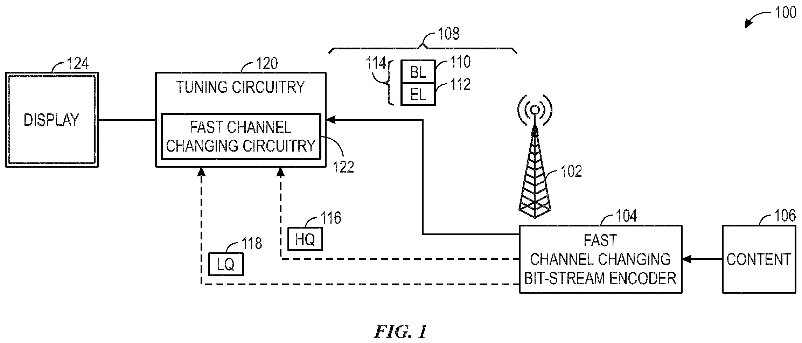

As mentioned above, the current techniques relate to implementing fast rendering during digital channel change operations. With this in mind, FIG. 1 is a diagrammatical overview of an exemplary digital content delivery and rendering system 100 where fast channel changing techniques are implemented, in accordance with aspects of the present embodiments. The system 100 includes a broadcasting entity 102 that uses a fast channel changing bit-stream encoder 104 to encode/compress digital content 106 provided via the broadcaster channel 108. As used herein, the term broadcasting entity or broadcaster may be defined as an entity that provides any one-to-many transmissions (e.g., a wireless broadcast transmission, cable television signals, such as quadrature amplitude modulation (QAM) signals, and/or Internet Protocol (IP) multicast signals). As will be described in more detail below, the content 106 may be encoded/compressed into a fast channel changing adapted content that provides encoded/compressed first data streams (e.g., digital channel changing stream) and second data streams (e.g., full content provision streams) that represent the content 106. For example, in one embodiment a base layer 110 and enhanced layer 112 pair 114 may be generated by the broadcaster 102 via the encoder 104 and provided on the broadcaster's channel 108. In another embodiment, a high quality stream 116 and a low quality stream 118 may be generated via the encoder 104 and provided via one or more of the broadcaster's channels 108.

Tuning circuitry 120 may be responsible for tuning into the broadcaster's channel 108 to receive the content 106 in the form of the encoded/compressed content from the encoder 104. As mentioned above, in traditional tuning circuitry, upon a request for a digital channel change operation (e.g., via a user input of a remote control, etc.), a complex process of synchronizing the digital signal, demodulating the signal into bits, deinterleaving and error correcting the bits, performing packet synchronization, filling video buffers, performing video bit stream variable length coding synchronization, and decoding the video syntax may occur. Further, the encoded content may have a relatively long span between intra-coded (I-frames) in the group of pictures (GOP) making up the content. Because the video syntax decoding may utilize I-frames, this long span between I-frames may be a major factor resulting in undesirable lags between digital channel change operations, as the traditional tuning circuitry may only be able to complete rendering of the digital content after observing an I-frame, and depending on when the tuning circuitry receives the channel change command, the tuning circuitry may experience longer wait times until observing the next I-frame.

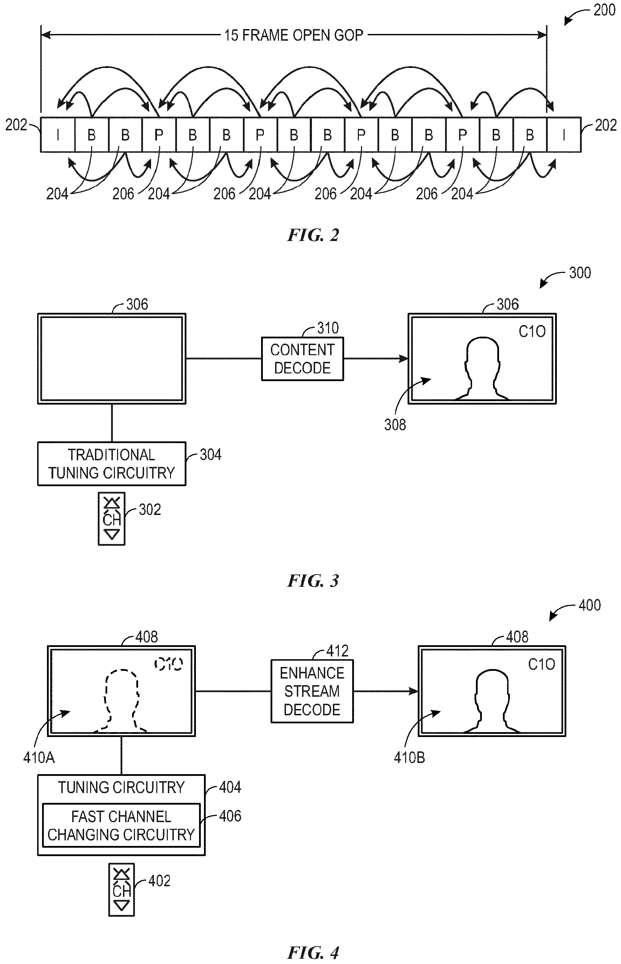

FIG. 2 is a schematic diagram illustrating a group of pictures (GOP) 200 of compressed digital content that, when unmitigated, may cause undesirable channel changing lag, in accordance with aspects of the present embodiments. In the depicted embodiment, the GOP 200 includes 15 frames (i.e., approximately ½ sec at a typical video frame rate of 29.97 frames/sec). The length is denoted by the recurrence of the I-frames 202, which, as illustrated, do not require other video frames to decode. In contrast, the bidirectional predicted picture frames 204 require the preceding frame and the following frame to decode and the predicted picture frames 206 are decoded using the previous frame. Accordingly, to properly decode the content, an I-frame 202 may be required and longer intervals between I-frames 202, which may increase encoding efficiency and lower the transmitted bit rate, may result in additional delay in rendering content upon a digital channel change operation. Indeed, more advanced video compression techniques, such as AVC (H.264) and HEVC (H.265), achieve higher compression efficiency by making better predictions and using longer GOP structures, as the predicted frames typically require far fewer bits. Thus, GOP lengths using these formats are typically longer than in less complex compression schemes (e.g., a scheme of the Moving Pictures Experts Group (MPEG-2)). For example, in HEVC, GOP lengths may range from 30-60 frames or more, which, depending on the frame rate of the video content, may equate to about 1-2 seconds of delay that may be introduced waiting for an I-frame occurrence.

Returning to FIG. 1, to mitigate this delay caused by large GOP lengths in the compressed content, fast channel changing circuitry 122 may be used to perform a fast channel change operation. The fast channel changing circuitry 122 may utilize the first stream data to perform a more simplistic decoding and rendering as an initial rendering of the content upon a digital channel change operation. For example, when a digital channel change operation is implemented via the tuning circuitry 120, the base layer 110 and/or low quality stream 118 may be decoded and rendered on the display 124 initially, while the enhanced layer 112 and/or the high quality stream 116 is decoded for subsequent rendering. Once the enhanced layer 112 and/or the high quality stream 116 is decoded and ready for rendering, the fast channel changing circuitry 122 may switchover from rendering merely the base layer 110 to rendering the enhanced layer 112 as well and/or may switch from rendering the low quality stream 118 to rendering the high quality stream 116. As will be illustrated in more detail below, the GOP length of the base layer 110 and/or the low quality stream 118 may be reduced with respect to the enhanced layer 112 and/or the high quality stream 116. By reducing the GOP length, I-frames may occur at a more frequent interval, thus reducing the delay caused in the decoding process waiting for the occurrence of an I-frame.

In some embodiments, a broadcast transmission may include several programs that may be multiplexed on the same RF channel. In such embodiments, channel-changing operations to another program on the same RF signal may not require a full decoding chain of operation. Instead, the channel-change time may inherently be shorter because the physical layers are already in place. In this situation, when switching channels the decode buffers are typically flushed and then filled with the new channel data. Accordingly, the channel-change time can be additionally reduced if parallel buffers are maintained for all of the channels on the RF signal by the receiver. In accordance with this invention, the receiver would only need to have the relatively small buffers for the LQ or BL elements of each channel in order to advantageously further eliminate the buffer-filling portion of the channel change latency.

To further illustrate the benefits of the fast channel changing techniques described herein, FIG. 3 is a diagrammatical representation of an example system 300 where traditional channel changing operations result in an undesirable channel changing lag, in accordance with aspects of the present embodiments. As illustrated by the system 300, a digital channel changing operation has been requested by the remote control 302. However, because the traditional tuning circuitry 304 does not include fast channel changing circuitry, the display 306 does not provide a content rendering 308 until after the full content is decoded 310.

In contrast, FIG. 4 is a diagrammatical representation of an example system 400 where the fast channel changing circuitry of FIG. 1 is used to mitigate undesirable channel changing lag, in accordance with aspects of the present embodiments. In the current embodiment, the tuning circuitry 404 includes fast channel changing circuitry 406, which decodes and renders, on the display 408, a first stream content rendering 410A prior to the full decoding of the second stream 412. Once the second stream 412 (or the enhanced stream) is decoded, the decoded enhanced stream rendering 410B is presented on the display 408.

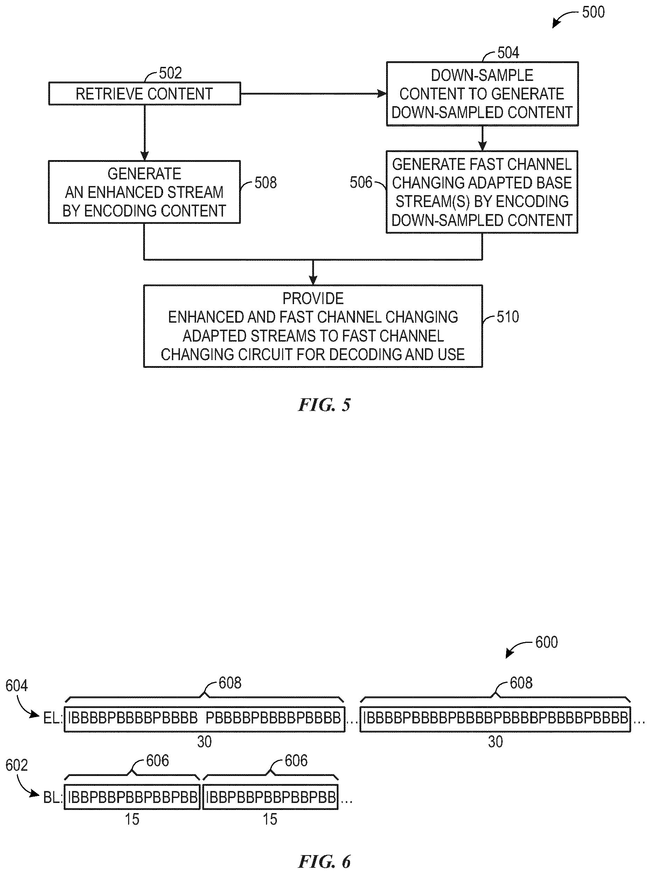

Turning now to details of generating the fast channel changing adapted content, FIG. 5 is a flow chart illustrating a process 500 for generating the fast channel changing content for use by the fast channel changing circuitry of FIG. 1, in accordance with aspects of the present embodiments. The process 500 begins by retrieving / receiving the content to be provided (block 502). For example, the content may be a 4k ultra-high definition format of content.

As mentioned above, two versions of the fast channel changing adapted content, a first stream that is representative of down-sampled content and a second stream (e.g., an enhanced stream) that is representative of the full version of the digital content are used by the fast channel changing circuitry. Accordingly, process 500 includes down-sampling the content to generate a down-sampled version of the content (block 504).

By encoding the down-sampled version of the digital content, a fast channel changing adapted first stream is generated (block 506). The first stream includes a GOP length that is relatively short (e.g., 15 frames or less), enabling fast decoding and rendering of the first stream.

Further, the process 500 includes generating a second stream (e.g., an enhanced stream) by encoding the retrieved content from block 502 (block 508). The second stream may include a GOP length that is relatively longer (e.g., greater than 15 frames), to enable more efficient compression of the digital content.

The enhanced and fast channel changing adapted streams are transmitted to the receiving device and provided to the fast channel changing circuitry for decoding and use, as described herein (block 510). For example, the fast channel changing adapted first stream may be temporarily rendered while the longer GOP length enhanced second stream is decoded. Once the enhanced second stream is decoded, the rendering may include the enhanced second stream. Transmission of the fast channel changing adapted first stream and the enhanced second stream may utilize a single modulation and coding for both the first and second streams, or may utilize different modulation and coding schemes.

FIG. 6 is a schematic diagram of fast channel changing adapted content 600 generated in the form of a base layer (BL) and an enhancement layer (EL), in accordance with aspects of the present embodiments. As illustrated, in the current embodiment, the fast channel changing adapted content 600 includes a base layer 602 and an enhanced layer 604. The base layer has a GOP length 606 of 15 frames, while the enhanced layer 604 includes a GOP length 608 of 30 frames. In the current embodiment, the fast channel changing adapted content 600 includes scalable HEVC (SHVC) data that enables encoding of content as a lower-resolution base layer 602 with an enhanced layer 604 that contains differential high-resolution information, which when added to the decoded base layer 604, reconstructs the higher resolution picture. The SVHC data may provide different types of scalability, including quality scalability (e.g., where different quality versions of content are provided), temporal scalability (e.g., where parts of the stream can be removed in a way that the resulting sub-stream forms another valid bit stream for some target decoder, and the sub-stream represents the source content with a frame rate that is smaller than the frame rate of the complete original bit stream), and spatial scalability (e.g., where a base layer provides a base spatial resolution).

The Advanced Television Systems Committee (ATSC) 3.0 broadcast standard allows for SHVC coding and the BL and EL bitstreams to be carried on different Physical Layer Pipes (PLPs), which are virtual channels within a 3.0 transmission signal that have different bit rates and reception robustness. While the BL and EL bitstreams can be used to facilitate less robust versions of content when needed by a content tuner, by modifying the content provided in the BL and EL bitstreams, they can be used in a new way to solve a very different problem of digital channel change delay.

By using a shorter GOP structure in the BL of an SHVC bitstream than in higher resolution EL bit stream, the BL may be more quickly decoded and, thus, used to facilitate a more rapid channel change time. While implementing a shorted GOP length may slightly decrease the coding efficiency of the BL (e.g., by introducing higher-bit I-frames), such shorting may also allow longer GOP lengths to be used in the EL, as a decoded and rendered BL may result in a sufficient user experience to enable more decoding time for a longer EL GOP. Additionally, audio may be carried on the same PLP as the BL video in order to eliminate any start-of-decoding delays for PLP sync-up.

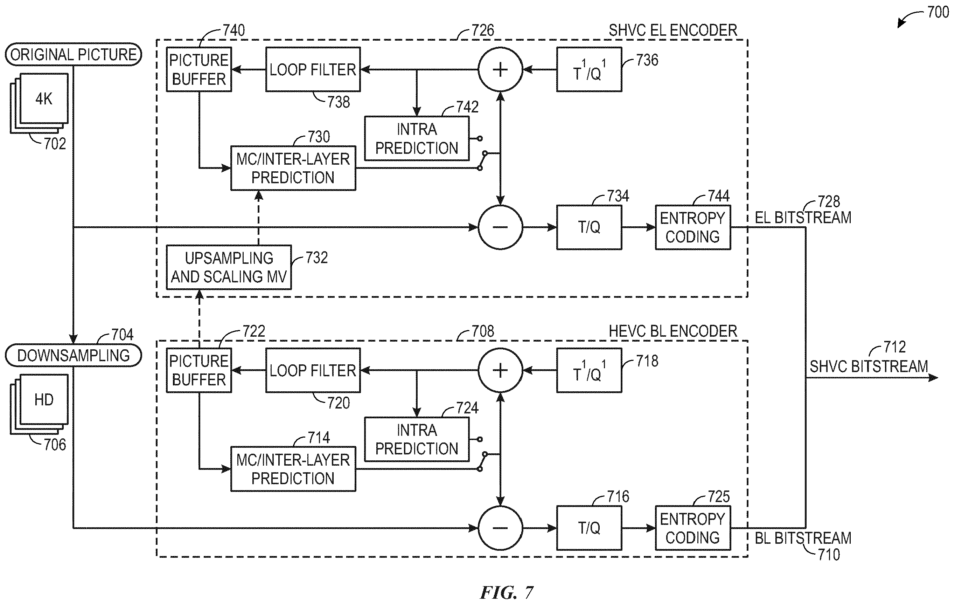

FIG. 7 is a schematic diagram of scalable high efficiency video coding (SHVC) circuitry 700 that may be used to generate the fast channel changing adapted content of FIG. 6, in accordance with aspects of the present embodiments. As mentioned above, content 702 (e.g., 4k ultra-high definition (UHD) content) is received and down-sampled by a down-sampling component 704, resulting in down-sampled content 706 (e.g., high-definition (HD) content).

The down-sampled content 706 is provided to an HEVC BL encoder 708, which provided a BL bitstream portion 710 of the SHVC bitstream 712. The BL encoder 708 may process the down-sampled content 706 by an inter-layer prediction module 714, which performs inter-layer prediction and inter-layer motion parameter prediction.

Additionally, a transform/quantization (T/Q) module 716 and an inverse transform/quantization (T¹/Q¹) module 718 may be applied. Further, the loop filters 720 may be used to filter the content, such that the filtered content may be stored in the decoded picture buffer 722. The intra prediction module 724 calculates prediction values through extrapolation from already coded values. An entropy coding module 725 is used to ultimately generate the BL bitstream 710.

An SHVC EL encoder 726 is also provided and is used to encode the original content 702. The encoded EL bitstream portion 728 of the SHVC bitstream 712 is generated using the SHVC EL encoder 726. The SHVC EL encoder 726 has similar components to the SHVC BL encoder 708. The Inter-layer prediction module 730 may process the original content 702 by performing inter-layer prediction and inter-layer motion parameter prediction by up-sampling calculations 732.

Additionally, a transform/quantization (T/Q) module 734 and an inverse transform/quantization (T¹/Q¹) module 736 may be applied. Further, the loop filters 738 may be used to filter the content, such that the filtered content may be stored in the decoded picture buffer 740. The intra prediction module 742 calculates prediction values through extrapolation from already coded values. An entropy coding module 744 is used to ultimately generate the EL bitstream 728.

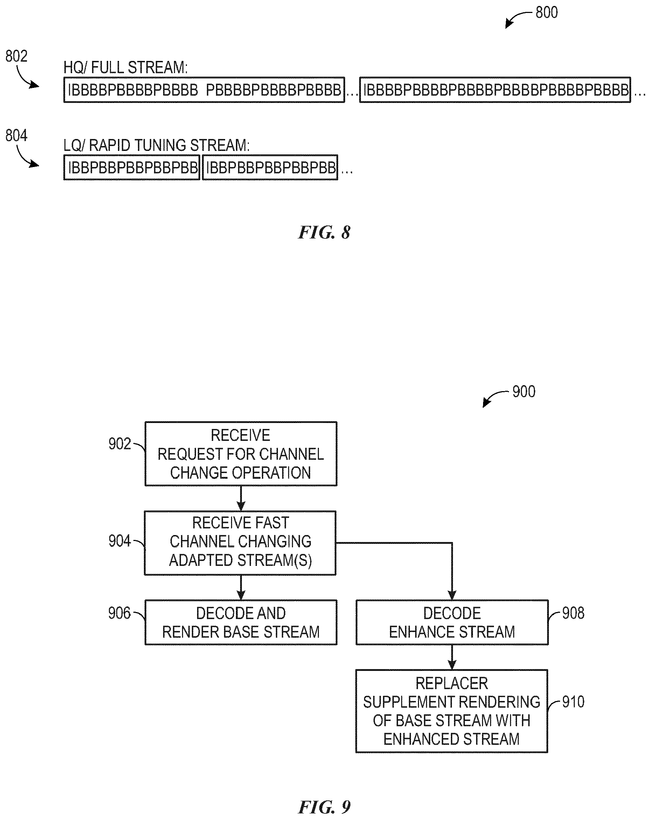

Having discussed the generation of an SHVC-based fast channel changing adapted content, the discussion now turns to another form of fast channel changing adapted content. FIG. 8 is a schematic diagram of fast channel changing adapted content 800 generated in the form of simulcast high quality (HQ) / full content stream 802 and a relatively lower quality (LQ) / Rapid Tuning Stream 804, in accordance with aspects of the present embodiments. In contrast to the SHVC-based fast channel changing adapted content discussed in FIG. 6, the current simulcast high quality (HQ) / full content stream 802 and a relatively lower quality (LQ) / Rapid Tuning Stream 804 includes two independent streams of content. In such an embodiment, because no EL information has to be added to a BL stream to provide full-resolution pictures, the lower resolution stream may not only have shorter GOP lengths, but may also have a relatively lower bit rate with poorer video quality than in the SHVC embodiments.

Similar to the SHVC embodiments, the lower quality /rapid tuning stream 804 may have a relatively smaller GOP length (e.g., <=15 frames) for fast decoding and rendering, while the high quality /full stream 802 may have a relatively longer GOP length (e.g., >15 frames) for efficient compression. For additional efficiencies, low-quality (e.g., more highly compressed content and/or lower resolution data, such as stereo audio content in contrast to full quality 5.1 digital surround sound) audio might accompany the low-quality rapid tuning stream 804, while full quality audio accompanies the high quality / full stream 802. Alternatively, full quality audio may accompany the low quality / rapid tuning stream, if desired.

In the case that the simulcast embodiment is implemented, the low quality / rapid tuning stream 804 may be initially rendered while the high quality / full stream 802 is decoded. Once the high quality / full stream 802 is decoded, a switchover to the high quality / full stream 802 may be initiated.

FIG. 9 is flowchart, illustrating a process 900 for using fast channel changing adapted content to provide fast channel changing that mitigates traditional digital content rendering lag, in accordance with aspects of the present embodiments. The process 900 begins by receiving a request for a digital channel change operation request (block 902) and determining that a digital channel change operation is to be performed. For example, such a request may be received based upon a user interaction with a remote control or other interface.

Upon receiving the digital channel change operation request, fast channel changing adapted content streams are received (block 904). For example, as mentioned above, the fast channel changing adapted content streams may include a first stream and a second stream. In the case of an SHVC-based fast channel changing adapted content, the first stream may include a base layer (BL) and the second stream may be an enhancement layer (EL). The BL and the EL, when added together, form the original video content. In the case of simulcast streams of fast channel changing adapted content, the first stream may be a low quality / rapid tuning stream that includes an encoded lower-resolution version of the original content, while the high quality / full stream may include an encoded full version of the original content. Additionally and/or alternatively, the first stream may provide downgraded audio, such as mono or stereo content, over the second stream, which may provide relatively higher grade audio, such as 5.1 channels of audio content. This may further help with rapid decoding and rendering of the first stream, by reducing the amount of audio data to be decoded prior to rendering.

In either case, the first stream may include a GOP length that is relatively shorter than the GOP length of the second stream. While in some embodiments the GOP length of both the first stream and the second stream could be equally relatively short, by reducing the GOP length of the first stream, but maintaining or relatively increasing the GOP length of the second stream, the fast channel changing operation may be implemented, while maintaining compression efficiencies of the second stream, as discussed above.

The process continues by decoding and rendering the first stream (block 906). As mentioned above, because the GOP length of the first stream is relatively small (e.g., <=15 frames), the first stream can be decoded and rendered quite rapidly, resulting in a reduced rendering time as compared to traditional digital channel changing operations that merely render the enhanced stream (e.g., a single high bitrate, long-GOP, full resolution stream). Further, the first stream can be encoded with lower quality audio as opposed to an enhanced stream. This may result in more rapid decoding of audio associated with the first stream, which may result in faster decoding of temporary content for digital channel changing.

While the first stream is rendered, the decoding of the enhanced stream may be run simultaneously (e.g., in parallel) (block 908). By rendering the first stream (block 906) during decoding of the enhanced stream, additional decoding time may be allotted without undesirable delays in digital channel changing renderings. This may mean that in some embodiments, the GOP length of the second stream may actually be increased, resulting in increased compression efficiencies of the second stream. The second stream may replace and/or supplement rendering of the first stream (block 910).

While only certain features of the present disclosure have been illustrated and described herein, many modifications and changes will occur to those skilled in the art (e.g., the use of multiple tuners, etc.). It is, therefore, to be understood that the appended claims are intended to cover all such modifications and changes as fall within the true spirit of the present disclosure.

## Claims

1. A fast channel changing circuitry (122), wherein the fast channel changing circuitry (122) is configured to:
receive a request to perform a digital channel change operation to a particular channel;
receive a fast channel changing adapted content for content of the particular channel, the fast channel changing adapted content comprising:
a first stream; and
a second stream;
wherein a group of pictures (GOP) length of the first stream is smaller than a GOP length of the second stream; and
the fast channel changing circuitry (122) is further configured to:
decode and render the first stream while the second stream is decoded; and
after decoding the second stream, render the second stream.

2. The fast channel changing circuitry (122) of Claim 1, wherein the first and second streams are configured to display different versions of the same audio and video content.

3. The fast channel changing circuitry (122) of Claim 1, wherein:
the fast channel changing adapted content comprises a scalable high efficiency video coding (SHVC) bit stream; and wherein
the first stream comprises a base layer (BL) (110) and the second stream comprises an enhancement layer (EL) (112), wherein the BL (110), when added to the EL (112), is used to generate the fast channel changing adapted content; and
the fast channel changing circuitry (122) is configured to render the second stream by rendering a combination of the BL (110) and the EL (112), such that the EL (112) supplements the BL (110) to render the content.

4. The fast channel changing circuitry (122) of Claim 1, wherein:
the fast channel changing adapted content comprises simulcast streams; and wherein the first stream comprises a low quality (LQ) version (118) of the fast channel changing adapted content and the second stream comprises a high quality (HQ) version (116) of the fast channel changing adapted content; and
the fast channel changing circuitry (122) is configured to render the second stream by rendering the HQ version (116) of the content in lieu of the LQ version (118) via a switchover.

5. A fast channel changing adapted content encoding system, the fast channel changing adapted content encoding system being configured to:
receive (502) digital content;
down-sample (504) the digital content to generate a down-sampled version of the digital content;
generate (506) fast channel changing adapted content, by:
encoding the down-sampled version of the digital content to generate a first stream for subsequent decoding and rendering while a second stream is being decoded; and
encoding the digital content to generate (508) the second stream;
wherein a group of pictures (GOP) length of the first stream is smaller than a GOP length of the second stream; and
provide (510) the fast channel changing adapted content to tuning circuitry comprising fast channel changing circuitry (122) configured to decode and render the first stream in an interim, while decoding the second stream.

6. The fast channel changing adapted content encoding system of Claim 5, wherein the fast channel changing adapted content encoding system is configured to encode the down-sampled version of the digital content to generate a first stream wherein the GOP length of the first stream is 15 frames or less.

7. The fast channel changing adapted content encoding system of Claim 5 or Claim 6, wherein the fast channel changing adapted content encoding system is configured to encode the digital content to generate (508) the second stream wherein the GOP length of the second stream is greater than 15 frames.

8. The fast channel changing adapted content encoding system of Claim 5, wherein the fast channel changing adapted content encoding system is configured to generate (506) fast channel changing adapted content comprising a scalable high efficiency video coding (SHVC) bit stream.

9. The fast channel changing adapted content encoding system of Claim 8, wherein the fast channel changing adapted content encoding system is configured to generate the first stream and the second stream, wherein the first stream comprises a base layer (BL) (110) and the second stream comprises an enhancement layer (EL) (112) that when combined with the BL (110) is used to produce the fast channel changing adapted content.

10. The fast channel changing adapted content encoding system of Claim 8, wherein the fast channel changing adapted content encoding system is configured to generate (506) fast channel changing adapted content comprising a scalable high efficiency video coding (SHVC) bit stream which provides spatial scalability.

11. The fast channel changing adapted content encoding system of Claim 8, wherein the fast channel changing adapted content encoding system is configured to generate (506) fast channel changing adapted content comprising a scalable high efficiency video coding (SHVC) bit stream which provides quality scalability.

12. The fast channel changing adapted content encoding system of Claim 8, wherein the fast channel changing adapted content encoding system is configured to generate (506) fast channel changing adapted content comprising a scalable high efficiency video coding (SHVC) bit stream which provides temporal scalability.

13. The fast channel changing adapted content encoding system of Claim 5, wherein the fast channel changing adapted content encoding system is configured to generate (506) fast channel changing adapted content comprising simulcast streams of the first stream and the second stream, wherein each of the first stream and the second stream can be independently decoded to render a version of the digital content.

14. The fast channel changing adapted content encoding system of Claim 13, wherein the fast channel changing adapted content encoding system is configured to generate the first stream and the second stream, wherein the first stream comprises a low quality (LQ) version (118) of the digital content and the second stream comprises a high quality (HQ) version (116) of the digital content.

15. A circuitry-implemented method, the method comprising:
determining, via circuitry, that a digital channel change operation is to be performed;
upon determining that the digital channel change operation is to be performed, decoding and rendering a first stream of digital content associated with a particular digital channel to be tuned to in the digital channel change operation;
while rendering the first stream of the digital content, decoding a second stream of the digital content; and
rendering the second stream of the digital content in lieu of or supplemental to the first stream upon decoding of the second stream of the digital content.
